# EUROPEAN PATENT SPECIFICATION

(11) **EP 1 478 078 B1**
(45) Date of publication and mention of the grant of the patent: **23.03.2011**
(21) Application number: 04010566.0
(22) Date of filing: 04.05.2004
(51) Int. Cl.: H02K 3/50, H02K 5/22

(54) **Electric motor**
Elektromotor
Moteur électrique

(30) Priority: 13.05.2003 JP 2003134560
(43) Date of publication of application: 17.11.2004
(73) Proprietor: FANUC CORPORATION, Oshino-mura Minamitsuru-gun Yamanashi 401-0597 (JP)
(72) Inventor: Yamamoto, Tomonaga, Fujiyoshida-shi Yamanashi 403-0005 (JP); Kimijima, Masami, Oshino-mura Minamitsuru-gun Yamanashi (JP)
(74) Representative: Schmidt, Steffen J.

(56) References cited:
- DE-A1- 2 320 865
- PATENT ABSTRACTS OF JAPAN vol. 2000, no. 02, 29 February 2000 (2000-02-29) -& JP 11 332199 A (AICHI ELECTRIC CO LTD), 30 November 1999 (1999-11-30)
- PATENT ABSTRACTS OF JAPAN vol. 1999, no. 08, 30 June 1999 (1999-06-30) -& JP 11 089153 A (MATSUSHITA ELECTRIC IND CO LTD), 30 March 1999 (1999-03-30)
- PATENT ABSTRACTS OF JAPAN vol. 1996, no. 03, 29 March 1996 (1996-03-29) -& JP 07 308046 A (SHIBAURA ENG WORKS CO LTD), 21 November 1995 (1995-11-21)
- PATENT ABSTRACTS OF JAPAN vol. 1997, no. 12, 25 December 1997 (1997-12-25) -& JP 09 215248 A (FANUC LTD), 15 August 1997 (1997-08-15)
- PATENT ABSTRACTS OF JAPAN vol. 1996, no. 03, 29 March 1996 (1996-03-29) -& JP 07 298544 A (NIPPON DENSAN CORP), 10 November 1995 (1995-11-10)
- PATENT ABSTRACTS OF JAPAN vol. 017, no. 535 (E-1439), 27 September 1993 (1993-09-27) -& JP 05 146106 A (MATSUSHITA SEIKO CO LTD), 11 June 1993 (1993-06-11)

## Description

### BACKGROUND OF THE INVENTION

### 1. Field of the Invention

The present invention relates to an electric motor.

### 2. Description of the Related Art

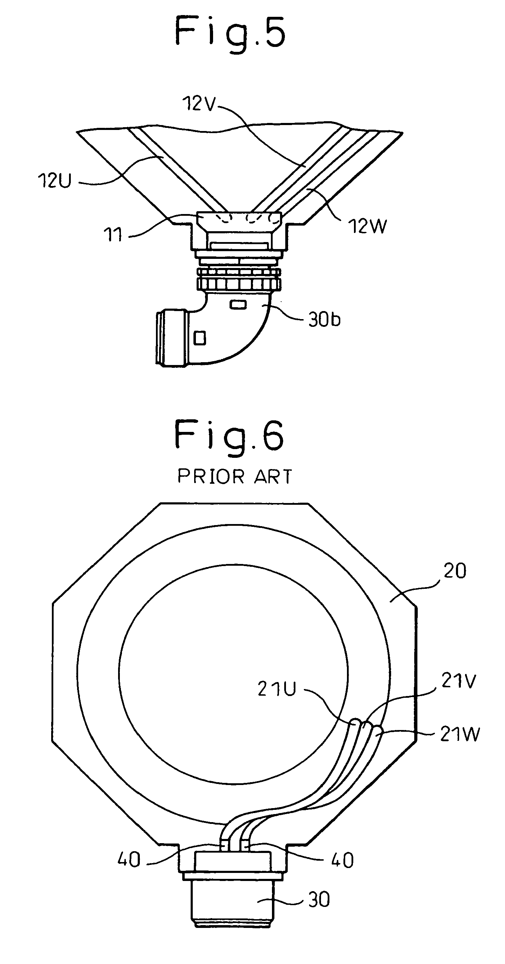

Conventionally, a connection between an end of a lead wire of a stator winding and a connector for supplying a power to the stator winding is achieved by soldering. Fig. 6 shows an example of an electric motor 20 in which a connection between lead wires 21U, 21V and 21W of U, V and W phases of a stator winding of the motor and a power connector 30 is achieved by soldering by means of a solder 40. As shown, ends of the lead wires 21U, 21V and 21W of the stator winding must be moved to a position of the power connector 30. Further, because the lead wires are flexible, the lead wires must be accommodated in a housing of the motor 20 such that the lead wires do not protrude toward the inside of the stator or the outside of a coil end of the motor 20.

In a process prior to the soldering, an enamel coating on an end of the lead wire is removed by burning and brushing. Possible problems, such as insufficiency of removal of the coating, burning of the lead wire by heating it too much, and/or defects of in the soldering, may deteriorate the quality of the motor.

As a method for connecting the lead wire to a pigtail of the connector, for supplying power, without soldering, several connection methods are known, as shown below: Japanese Patent Publication (Kokai) No. 2002-84701 discloses a connection method including bundling the lead wire and the pigtail, and crimping them using a metal tube or the like; Japanese Patent Publication (Kokai) No. 11-275793 discloses a connection method using fusing; and Japanese Patent Publication (Kokai) No. 2001-95201 discloses a connection method using welding. In these methods, the end of the lead wire and the pigtail are directly connected each other.

On the other hand, Japanese Patent Publication (Kokai) No. 2000-69705 discloses a connection method including fixing a terminal block in a housing of a motor, and fusing each phase terminal of the terminal block and an end of each phase lead wire of a stator winding.

As described in the above Japanese Patent Publication (Kokai) No. 2002-84701, No. 11-275793 and No. 2001-95201, in a method including directly connecting the end of the lead wire of the stator winding to the pigtail for supplying a power and drawing the lead wire to the outside of the motor, the lead wire can be moved freely. Therefore, the lead wire must be fixed to the housing of the motor or the like, by a certain way or means, such that the lead wire is prevented from freely moving. As a result, the production time of the motor is disadvantageously increased.

Also, in the method of the above Japanese Patent Publication (Kokai) No. 2000-69705, the lead wire may be freely bent, therefore, the wire must be fixed and the production time of the motor is increased.

DE 23 20 865 describes an electrical motor with a stator wherein the ends of stator winding wires are connected with intermediate conductors to provide easy connection during production.

### SUMMARY OF THE INVENTION

It is an object of the present invention to provide an electric motor capable of being assembled easily and able to facilitate a connection between the ends of lead wires of a stator winding and a power connector such that the production time of the motor is short.

In accordance with the present invention, an electric motor according to claim 1 is provided.

The junction member may further comprise a male-type or a female-type pin, or a connector structure conforming to a pin, which is electrically connected to a conductive part and is arranged on the insulator.

The male-type or the female-type pin, or the connector structure may be directly connected to a power connector positioned on a cable side.

The junction member may be substantially fixed by a cover when the cover is attached to a housing of the motor.

The fusing my be realised by crimping the end of each lead wire and the respective conductive part by a fusing member.

### BRIEF DESCRIPTION OF THE DRAWING

The above and other objects, features and advantages of the present invention will be made more apparent, from the following description of the preferred embodiments thereof, with reference to the accompanying drawings, wherein:
Fig. 1 is a side view of an example of a junction member of one embodiment of an electric motor of the invention;
Fig. 2 is a front view of the junction member of Fig. 1;
Fig. 3 is a view for explaining the embodiment of the motor provided with the junction member;
Fig. 4 is a for indicating an example of a connection between the motor of the embodiment and a power connector;
Fig. 5 is a schematic view for explaining an example in which the junction member is connected to a power connector arranged on a cable side without using a power connector arranged on a motor side; and
Fig. 6 is a view for explaining an electric motor of the prior art in which lead wires of a stator winding of the motor are connected to a power connector by soldering.

### DETAILED DESCRIPTION

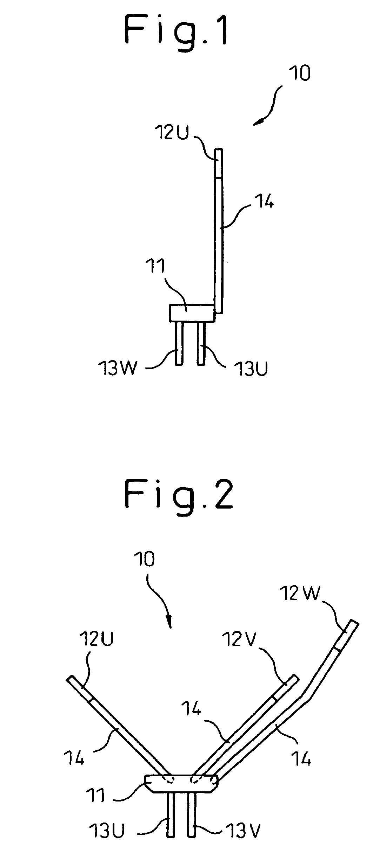

Figs. 1 and 2 are a side view and a front view, respectively, of an example of a junction member 10 of a three-phase motor of the invention, which electrically connects ends of lead wires of a stator winding of the motor to a power connector. The junction member 10 includes an insulator 11 and conductor or conductive parts 12U, 12V and 12W of three-phases formed of copper or the like. Each of the conductive parts 12U, 12V and 12W is electrically connected to each phase end of the each lead wire (i.e., U, V or W phase). These conductive parts 12U, 12V and 12W are integrated by fixing one end of each conductive part to the insulator 11, and electrically connecting the ends of the parts to male-type pins 13U, 13V and 13W, protruding from the insulator 11, respectively. The pins 13U, 13V and 13W are positioned on three of the four corners of a rectangular shape, respectively, and no pin is positioned on the remaining corner. In Fig. 2, reference numeral 14 indicates an insulating layer or a coating for insulating the conductive part 12U, 12V or 12W.

The conductive parts 12U, 12V and 12W of the junction member 10 have plasticity and are formed such that the conductive parts are positioned along the shape of the stator winding of the motor provided with the junction member 10.

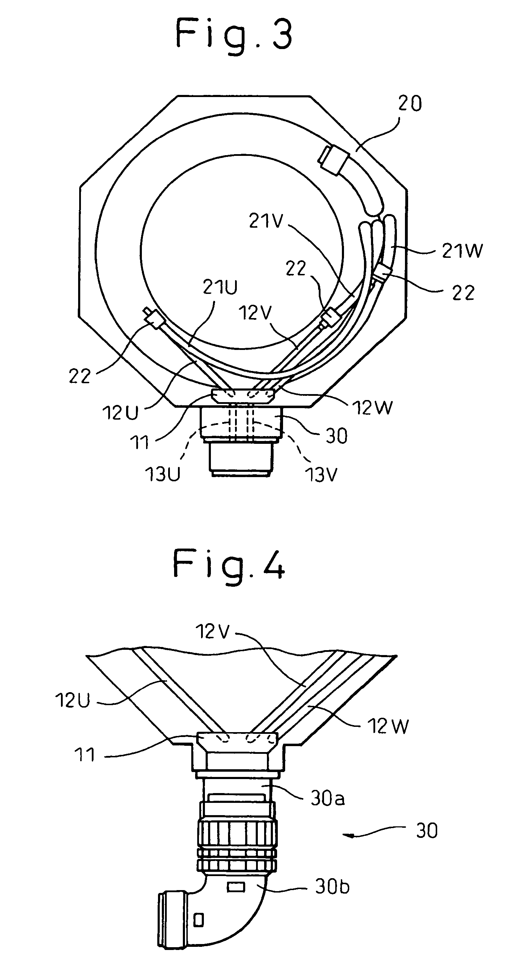

Fig. 3 indicates the junction member 10 applied to an electric motor 20 and connected to a power connector 30. The ends of the lead wires 21U, 21V and 21W of the three-phase windings of the motor 20 and the ends of the corresponding conductive parts 12U, 12V and 12W are electrically connected to each other, respectively, by fusing members 22. For example, the end of the lead wire 21U of U-phase of the stator winding and the end of the conductive part 12U of U-phase are bundled, crimped by the fusing members 22 and electrically connected to each other. Similarly, the ends of the lead wires 21V and 21W of V and W-phases of the stator winding and the ends of the conductive parts 12V and 12W of V and W-phases are bundled, crimped by the fusing members 22 and electrically connected to each other, respectively.

In this case, the conductive parts 12U, 12V and 12W are configured such that the parts are disposed along the shape of an end portion of the stator winding of a stator coil and configurations of the parts may be retained. Therefore, the conductive parts 12U, 12V and 12W cannot protrude into the inside of the stator or the outside of the coil end. Moreover, as the conductive parts 12U, 12V and 12W are integrally mounted to the insulator 11, the position of the insulator 11 in the motor 20 is naturally, and determined, therefore, the insulator 11 may be held at a desired position in the motor 20 without being fixed by a particular fixing means. Then, the junction member 10 may be substantially fixed by a tail end cover when the cover is attached to a housing of the motor 20. The male-type pins 13U, 13V and 13W protruding from the insulator 11 are engaged with female-type pins of the power connector 30 and electrically connected to the power connector 30.

As described above, the connection between the lead wires 21U, 21V and 21W of three-phases of the stator coil and the power connector 30 are achieved only by fusing and connecting the ends of the lead wires 21U, 21V and 21W and the ends of the conductive parts 12U, 12V and 12W, respectively, by means of the fusing members 22. Further, none of the lead wires 21U, 21V and 21W and the conductive parts 12U, 12V and 12W protrudes to the inside of the stator or the outside of the motor, therefore, an operation of assemble of the motor 20 may be carried out remarkably easily, and the efficiency of the operation may be increased.

Fig. 4 is a view for explaining a condition in which the power connector 30 is mounted to the motor 20 including the junction member 10 installed therein. A motor side power connector 30a of the connector 30 is connected to the male-type pins 13U, 13V and 13W of the junction member 10, and a cable side power connector 30b is attached to the motor side power connector 30a, whereby the stator winding and a cable (not shown) to be connected the cable side connector 30b may be electrically connected to each other.

Otherwise, because the junction member 10 has the male-type pins 13U, 13V and 13W protruding from the insulator 11, it is possible to directly connect the cable side power connector 30b to the junction member 10 as a set of female-type pins, as shown in Fig. 5. In Fig. 5, the motor side power connector 30a is not used, and the junction member 10 functions also as a motor side connector. Therefore, a number of components of the motor, and thus, a product cost of the motor may be decreased.

Although the male-type pins 13U, 13V and 13W are arranged on the junction member 10, female-type pins may be arranged on the junction member 10 instead.

The lead wires of the stator winding may be connected to the power connector for supplying to the stator winding by the conductors or conductive parts configured to be disposed along the shape of the coil end of the stator winding. Therefore, the lead wires do not protrude to the inside of the stator or the outside of the coil end, and are held in predetermined shapes at a connection point between the power connector and the lead wires of the stator winding, which makes the operation of assemble remarkably easy. Further, because the junction member connecting the lead wires of the stator winding to the power connector is formed of the conductors or conductive parts and the pins or the connector structure conforming to the pins, the motor may be formed more compactly compared to a motor of the prior art having a base connector. Moreover, the motor may be connected to the power connector by pin-connection and, therefore, the power connector can be easily disconnected and maintainability of the motor may be improved.

## Claims

1. An electric motor comprising:
a stator winding having a plurality of lead wires (21U-W),
a junction member (10) having a plurality of conductive parts (12U-W) electrically connected to ends of the lead wires (21U-W) and an insulator (11) for integrally mounting one end of each conductive part (12U-W);
wherein the conductive parts (12U-W) are formed to be disposed along a shape of the stator winding and are substantially fixed relative to the stator winding, and wherein the conductive parts (12U-W) of the junction member (10) and the ends of the lead wires (21U-W) of the stator winding are electrically connected to each other by fusing,
**characterized in that** the insulator (11) is held at a desired position in the motor (20) by the conductive parts (12U-W) integrally mounted to the insulator (11) and formed to be disposed along the shape of the stator winding, without fixing said insulator (11) to the
stator.

2. An electric motor as set forth in claim 1, wherein the junction member (10) further comprises a male-type (13U-W) or a female-type pin, or a connector structure conforming to a pin, which is electrically connected to the conductive parts (12U-W) and is arranged on the insulator (11).

3. An electric motor as set forth in claim 2, wherein the male-type (13U-W) or the female-type pin, or the connector structure, is directly connected to a power connector (30) positioned on a cable side.

4. An electric motor as set forth in claim 1, wherein the junction member (10) is substantially fixed by a cover when the cover is attached to a housing of the motor (20).

5. An electric motor as set forth in claim 1, wherein the fusing is realised by crimping the end of each lead wire (21U-W) and the respective conductive part (12U-W) by a fusing member (22).

## Patentansprüche

1. Elektromotor umfassend:
eine Statorwicklung mit einer Vielzahl von Anschlussdrähten (21U-W),
ein Verbindungsbauteil (10) mit einer Vielzahl von leitfähigen Teilen (12U-W), die elektrisch mit Enden der Anschlussdrähte (21U-W) verbunden sind, und einem Isolator (11) zur integralen Befestigung eines Endes jedes leitfähigen Teils (12U-W);
wobei die leitfähigen Teile (12U-W) derart ausgebildet sind, dass sie entlang einer Form der Statorwicklung angeordnet und relativ zu der Statorwicklung im Wesentlichen fixiert sind, und wobei die leitfähigen Teile (12U-W) des Verbindungsbauteils (10) und die Enden der Anschlussdrähte (21U-W) der Statorwicklung elektrisch miteinander durch Zusammenfügen verbunden sind,
**dadurch gekennzeichnet, dass** der Isolator (11) mittels der leitfähigen Teile (12U-W), die integral am Isolator (11) befestigt und derart ausgebildet sind, dass sie entlang einer Form der Statorwicklung angeordnet sind, in einer gewünschten Position im Motor (20) gehalten wird, ohne den Isolator (11) an dem Stator zu fixieren.

2. Elektromotor nach Anspruch 1, wobei das Verbindungsbauteil (10) ferner einen stecker- (13U-W) oder buchsenförmigen Pin oder eine Verbindungsstruktur umfasst, die einem Pin entspricht, der elektrisch mit den leitfähigen Teilen (12U-W) verbunden und an dem Isolator (11) angeordnet ist.

3. Elektromotor nach Anspruch 2, wobei der stecker- (13U-W) oder buchsenförmige Pin oder die Verbindungsstruktur direkt mit einem Stromanschluss (30) verbunden ist, der an einer Kabelseite positioniert ist.

4. Elektromotor nach Anspruch 1, wobei das Verbindungsbauteil (10) mittels einer Abdeckung im Wesentlichen fixiert ist, wenn die Abdeckung an einem Motorgehäuse (20) angebracht ist.

5. Elektromotor nach Anspruch 1, wobei das Zusammenfügen durch Crimpen des Endes jedes Anschlussdrahtes (21U-W) und des entsprechenden leitfähigen Teils (12U-W) mittels eines Fixierelements (22) realisiert ist.

## Revendications

1. Moteur électrique comprenant :
un enroulement de stator comportant une pluralité de fils conducteurs (21U-W),
un élément de jonction (10) comportant une pluralité de parties conductrices (12U-W) électriquement connectées aux extrémités des fils conducteurs (21U-W) et un isolateur (11) pour le montage solidaire d'une extrémité de chaque partie conductrice (12U-W) ;
dans lequel les parties conductrices (12U-W) sont formées pour être disposées selon une forme de l'enroulement de stator et sont sensiblement fixes par rapport à l'enroulement de stator, et dans lequel les parties conductrices (12U-W) de l'élément de jonction (10) et les extrémités des fils conducteurs (21U-W) de l'enroulement de stator sont électriquement connectées les unes aux autres par fusion,
**caractérisé en ce que** l'isolateur (11) est maintenu à une position souhaitée dans le moteur (20) par les parties conductrices (12U-W) solidairement montées sur l'isolateur (11) et formées pour être disposées selon la forme de l'enroulement de stator, sans fixer ledit isolateur (11) au stator.

2. Moteur électrique selon la revendication 1, dans lequel l'élément de jonction (10) comprend en outre une broche de type mâle ou de type femelle (13U-W), ou une structure de connecteur se conformant à une broche, qui est électriquement connectée aux parties conductrices (12U-W) et est disposée sur l'isolateur (11).

3. Moteur électrique selon la revendication 2, dans lequel la broche de type mâle ou de type femelle (13U-W), ou la structure de connecteur, est directement connectée à un connecteur d'alimentation (30) positionné sur un côté câble.

4. Moteur électrique selon la revendication 1, dans lequel l'élément de jonction (10) est sensiblement fixé par un couvercle lorsque le couvercle est attaché à un logement du moteur (20).

5. Moteur électrique selon la revendication 1, dans lequel la fusion est réalisée en sertissant l'extrémité de chaque fil conducteur (21U-W) et les parties conductrices respectives (12U-W) par un élément de fusion (22).
